Europäisches Patentamt

European Patent Office

Office européen des brevets

(11) Veröffentlichungsnummer: **0 514 727 A1**

# EUROPÄISCHE PATENTANMELDUNG

(21) Anmeldenummer: **92107857.2**

(22) Anmeldetag: **11.05.92**

(51) Int. Cl.5: **G03B 21/11**, G03B 27/46

(30) Priorität: **23.05.91 DE 4116801**

(43) Veröffentlichungstag der Anmeldung:
**25.11.92 Patentblatt 92/48**

(84) Benannte Vertragsstaaten:
**AT BE CH DE FR GB IT LI NL**

(71) Anmelder: **Agfa-Gevaert AG**

**W-5090 Leverkusen 1(DE)**

(72) Erfinder: **Klocke, Helmut, Dr.**
**Hochfeld 12**
**W-8134 Poecking(DE)**
Erfinder: **Liermann, Traugott, Dipl.-Ing.**
**Bussardstrasse 40**
**W-8025 Unterhaching(DE)**

(54) **Verfahren und Vorrichtung zum Rückvergrössern von mikroverfilmten Vorlagen.**

(57) Ein Verfahren zum Rückvergrößern von mikroverfilmten, in Form von Mikrobildern gespeicherten Vorlagen, wobei jeweils eine Vielzahl von Mikrobildern auf einem Träger enthalten ist, eine Auswahl aus der Vielzahl von Mikrobildern zur Rückvergrößerung auf ein Aufnahmemedium getroffen wird, jeweils eines der vorgewählten Mikrobilder in einem für die Rückvergrößerung geeigneten Bildfenster positioniert wird, und durch ein auf das Bildfenster fokussiertes Objektiv eine Übertragung des Mikrobildes auf das Aufnahmemedium erfolgt, ist so ausgebildet, daß während der Übertragung des ersten Mikrobildes ein zweites, auf einem anderen Träger befindliches Mikrobild in einem zweiten Bildfenster positioniert wird, und
nach der Übertragung des ersten Mikrobildes das zweite Mikrobild auf das Aufnahmemedium übertragen wird.

Fig. 2

Die Erfindung betrifft ein Verfahren und eine Vorrichtung zum Rückvergrößern von mikroverfilmten Vorlagen nach dem Oberbegriff des Anspruchs 1.

Verfahren und Vorrichtungen dieser Gattung sind bekannt, beispielsweise durch die DE-PS 36 22 008. Bei dem dort beschriebenen Gerät wird gemäß einer entsprechenden Vorwahl eine Anzahl von Mikrobildern automatisch rückvergrößert. Alle zum Rückvergrößern vorgewählten Bilder müssen sich jedoch auf ein und demselben Träger befinden.

Nachdem alle vorgewählten Mikrobilder rückvergrößert wurden, ist es notwendig, den Träger zu wechseln, einen anderen Träger in das Gerät einzulegen und das nächste für das Rückvergrößern vorgesehene Mikrobild zu positionieren. In der Zeit während des Entnehmens des ursprünglichen Trägers, Neueinlegen des neuen Trägers und Anfahren des nächsten Mikrobildes kann kein Rückvergrößerungsvorgang ablaufen und es entsteht ein Zeitverlust. Dies ist besonders dann nachteilig, wenn die Mikrobilder - beispielsweise in einem Mikrofilmarchiv - auf vielen Trägern untergebracht sind und die Wahrscheinlichkeit, mehrere Mikrobilder eines Trägers hintereinander zu vergrößern, eher gering ist.

Der Erfindung liegt die Aufgabe zugrunde, ein Gerät der eingangs genannten Art so auszubilden, daß der Rückvergrößerungsvorgang durch das Auswechseln der Träger und Positionieren des nächsten Mikrobildes nicht unterbrochen wird.

Diese Aufgabe wird erfindungsgemäß durch die Merkmale des Hauptanspruchs gelöst.

Die Erfindung macht sich dabei die Erkenntnis zunutze, daß während der Rückvergrößerung eines ersten Mikrobildes ein anderes, auf einem anderen Träger befindliches Mikrobild so positioniert wird, daß nach Beendigung der Rückvergrößerung des ersten Mikrobildes sofort oder zumindest mit verringerter Wartezeit mit der Rückvergrößerung des zweiten, auf dem zweiten Träger enthaltenen Mikrobildes begonnen werden kann.

Erfindungsgemäß ist dabei vorgesehen, zum Umschalten zwischen den einzelnen Bildfenstern den Fokus eines für die Rückvergrößerung verwendeten Objektivs von einem ersten Bildfenster, in welchem sich das erste, soeben rückvergrößerte Mikrobild befindet, auf das zweite Bildfenster, in welchem sich das nächste zum Rückvergrößern vorgesehene Mikrobild befindet, zu verändern. Dies geschieht beispielsweise durch Bewegen des gesamten Objektivs oder bei feststehendem Objektiv durch Umstellen des Fokus von einer ersten Abbildungsebene, in der sich das erste Bildfenster befindet, auf eine zweite Abbildungsebene, in der sich das zweite Bildfenster befindet. Der Strahlengang des Objektivs geht dann durch das erste Bildfenster und das darin befindliche Mikrobild. Aufgrund der geringen Tiefenschärfe des verwendeten Objektivs ruft dies aber keine Störungen hervor.

Die letztgenannte Ausführungsform ist speziell bei der Verwendung von planen Mikrobildträgern, sogen. "Microfiches", gut anzuwenden.

Ebenso ist es natürlich auch möglich, nach Beendigung der Rückvergrößerung des ersten Mikrobildes den Fokus des Objektivs nicht zu verändern, sondern ersatzweise das erste Bildfenster aus dem Fokus des Objektivs zu bewegen und das zweite Bildfenster mit dem darin positionierten Mikrobild in den Fokus des Objektivs zu bringen.

In beiden Fällen ist vorteilhaft erreicht, daß nach der Beendigung der ersten Rückvergrößerung nur noch vergleichsweise einfache und wenig zeitaufwendige Vorgänge notwendig sind, bis das zweite Mikrobild rückvergrößert werden kann.

Speziell die bei der Rückvergrößerung von auf sogenannten Mikrofilmen befindlichen Mikrobildern auftretenden, relativ langwierigen Einfädel- und Umspulvorgänge geschehen vorteilhaft zeitlich parallel zur Rückvergrößerung eines anderen Mikrobildes.

Eine vorteilhafte Weiterbildung der Erfindung sieht für Anwendungsfälle, bei denen die zur Rückvergrößerung vorgesehenen Mikrobilder auf mehr als zwei Trägern enthalten sind, vor, mit einer Wechseleinrichtung für die Träger und einem Behälter, der mehrere Träger aufnimmt, zu arbeiten. Die Wechseleinrichtung entnimmt automatisch - entsprechend der Vorwahl die jeweils benötigten Träger aus dem Behälter, transportiert den Träger in eine freie Positioniervorrichtung und bringt den Träger auch wieder aus der Positioniervorrichtung in den Behälter zurück. Während das eine Mikrobild rückvergrößert wird, kann so das Wechseln des Trägers aus dem Behälter und Positionieren des nächsten Mikrobildes erfolgen.

Obwohl das Umstellen des Fokus und der Wechsel des Trägers aus dem Behälter in die Positioniereinrichtung automatisch erfolgt, ist es sinnvoll, das Verfahren zum Rückvergrößern von mikroverfilmten Vorlagen so zu gestalten, daß möglichst wenig oft ein Umstellen des Fokus und ein Wechsel der Träger zwischen Positioniereinrichtung und Behälter stattfindet. Dazu ist es in einer Weiterbildung der Erfindung vorgesehen, die Reihenfolge der zum Rückvergrößern bestimmten Mikrobilder abweichend von der Reihenfolge, in der die Vorwahl erfolgte, neu zu sortieren. Es werden zuerst alle Mikrobilder, die sich auf den beiden, im Gerät eingelegten Trägern befinden, rückvergrößert. Wenn zusätzlich noch festgestellt wird, daß auf einem Träger zwei ausgewählte Mikrobilder sehr nahe zueinander liegen, werden diese Mikrobilder sofort nacheinander rückvergrößert. Die dazwischen entstehende Pause zum Positionieren ist kürzer als die Zeit, die für das Umstellen des Fokus notwendig ist.

Anschließend werden durch die Wechselvorrichtung ein oder zwei neue Träger in das Gerät transportiert und die darauf enthaltenen Mikrobilder in der bereits erläuterten Art und Weise rückvergrößert.

In der Praxis kommt es öfter vor, daß Sequenzen von zusammengehörigen Mikrobildern - etwa den einzelnen Seiten eines Dokumentes - hintereinander auf dem Träger enthalten sind. In solch einem Fall werden die einzelnen Mikrobilder der Sequenz zeitlich aufeinanderfolgend in dem ersten Bildfenster positioniert und rückvergrößert. Der Fokus wechselt dann nicht zwischen den Bildfenstern, sondern verbleibt in dem Bildfenster, in welchem sich die Sequenz befindet.

Nachfolgend wird ein mögliches Ausführungsbeispiel anhand von Figuren näher erläutert.

Es zeigen:

Fig. 1.    eine Gesamtansicht der Vorrichtung zum Rückvergrößern, in der die einzelnen Elemente der Erfindung z.T. nur schematisiert dargestellt sind,

Fig. 2    in schematischer Darstellung die beiden Vorrichtungen zum Positionieren der Mikrobilder und die Vorrichtung zum Verändern des Fokusses,

Fig. 3    die Vorrichtung gemäß Fig. 2 entlang der Schnittlinie III mit schematisiertem Strahlengang.

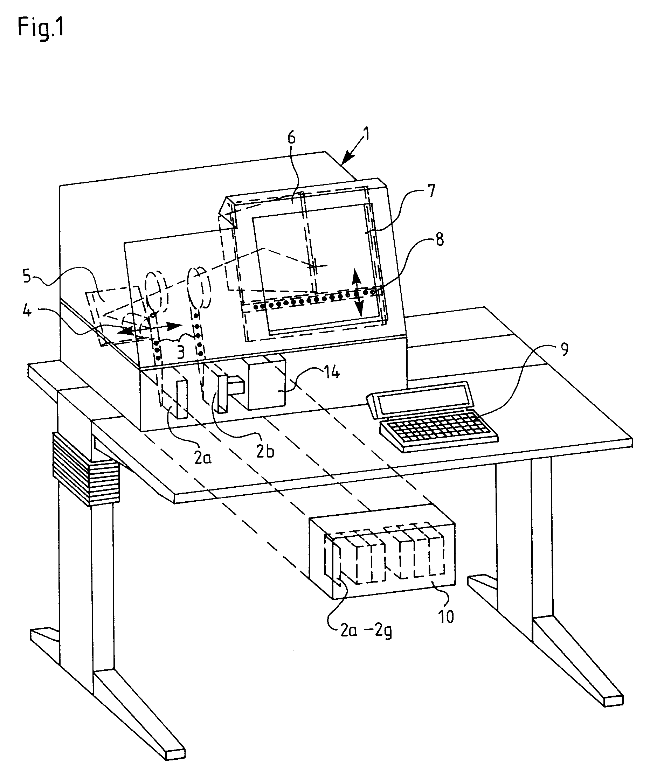

In Figur 1 ist mit 1 ein Gerät zum Rückvergrößern von mikroverfilmten Vorlagen bezeichnet. In das Gerät eingesetzt sind zwei Mikrofilmrollen 2a, 2b. Die Mikrofilmrollen dienen als Träger für hier nur andeutungsweise dargestellte Mikrobilder 3. Die Mikrobilder 3 werden durch ein Objektiv 4 vergrößert und über die Spiegel 5 und 6 auf eine Bildwand 7 übertragen. Ebenso überträgt das Objektiv 4 das rückvergrößerte Mikrobild auf ein Aufnahmemedium 8, welches im hier gezeigten Beispiel ein Scanner ist. Dieser Scanner tastet das rückvergrößerte Mikrobild zeilenweise ab und erlaubt eine elektronische Weiterverarbeitung des Bildes. Im Gerät 1 sind zwei Mikrofilmrollen 2a, 2b eingelegt. Vorne an das Gerät 1 angesetzt, hier zum besseren Verständnis in Art einer Explosionszeichnung dargestellt, befindet sich ein Behälter 10, in dem weitere Mikrofilmträger 2c bis 2g enthalten sind. Durch eine mit Bezugszeichen 14 versehene Wechselvorrichtung werden aus dem Behälter 10 Mikrofilmträger entnommen und im Gerät 1 eingelegt und auch wieder aus dem Gerät 1 zurück in den Behälter 10 transportiert.

Über eine Eingabevorrichtung 9 erfolgt die Vorwahl, aufgrund welcher die auf den Mikrofilmträgern 2a bis 2g befindlichen Mikrobilder 3 rückvergrößert werden. Ebenso ist es möglich, daß die Vorwahl der zum Rückvergrößern vorgesehenen Mikrobilder über einen Datenträger oder eine Datenfernübertragung erfolgt.

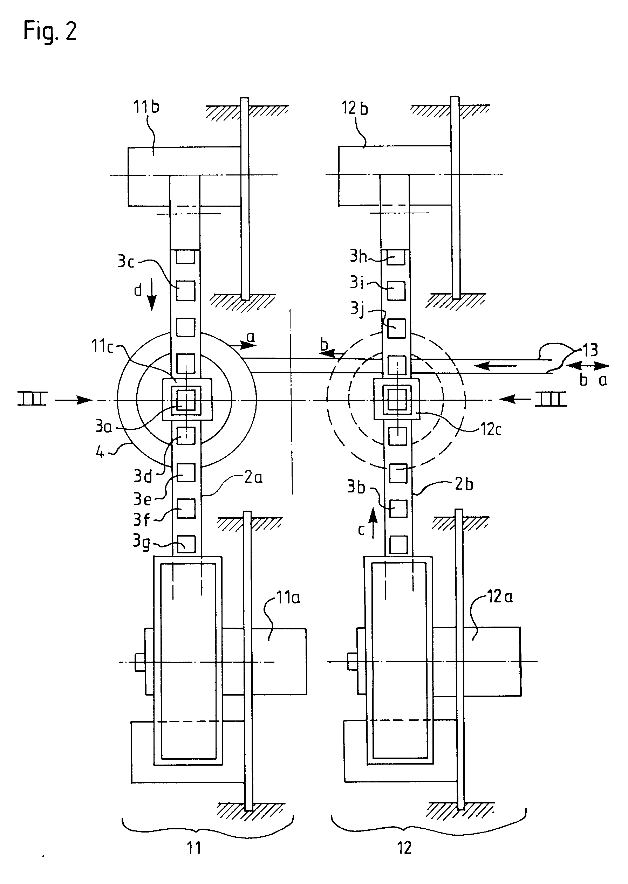

Anhand Figur 2 wird das Positionieren der einzelnen auf den Mikrofilmen 2a bis 2g enthaltenen Mikrobilder 3 und das Umstellen des Fokus des Objektivs 4 näher beschrieben. Mit 11 und 12 sind zwei voneinander unabhängige Positioniervorrichtungen bezeichnet. Jede der beiden Positioniervorrichtungen 11, 12, umfaßt je einen Abwickelmotor 11a bzw. 12a und einen Aufwickelmotor 11b bzw. 12b. Mit den Abwickel- und Aufwickelmotoren kann die Mikrofilmrolle 2a bzw 2b, jeweils unabhängig so bewegt werden, daß eines der Mikrobilder 3 im jeweiligen Bildfenster 11c bzw. 12c positioniert wird. Zur besseren Unterscheidung in der folgenden Beschreibung des Ablaufes werden die Mikrofilmbilder 3 mit Indizes 3a bis 3j bezeichnet. Das Objektiv 4 ist durch zwei konzentrische Kreise dargestellt. Im gezeigten Fall ist das Objektiv 4 auf das Bildfenster 11c fokussiert. Die zweite mögliche Stellung des Objektivs 4, in welcher es auf das Bildfenster 12c fokussiert ist, wird durch die beiden unterbrochenen, konzentrisch angeordneten Kreise schematisch dargestellt. Das Objektiv 4 ist entsprechend der Pfeile A und B zwischen den beiden Bildfenstern 11c und 12c verschiebbar angeordnet. Während die Rückvergrößerung des im Bildfenster 11c befindlichen Mikrobildes 3a stattfindet, transportiert die Positioniervorrichtung 12 mittels des Abwickelmotors 12a bzw. des Aufwickelmotors 12b den Mikrofilm 2b so lange in Richtung des Pfeiles C, bis sich das Mikrobild 3b im Bildfenster 12c befindet. Nach Beendigung der Rückvergrößerung des Mikrobildes 3a fährt die Mechanik 13 das Objektiv 4 in Richtung des Pfeiles A und stellt somit den Fokus des Objektivs 4 auf das Bildfenster 12c um. Nun kann mit der Rückvergrößerung des Mikrobildes 3b begonnen werden. Währenddessen wird nun durch die Positioniervorrichtung 11 die Mikrofilmrolle 2a so lange in Pfeilrichtung D bewegt, bis sich das Mikrobild 3c im Bildfenster 11c befindet. Nach Beendigung der Rückvergrößerung des Mikrobildes 3b fährt die Mechanik 13 das Objektiv 4 in Pfeilrichtung B wieder zurück in die ursprüngliche Position und die Rückvergrößerung des Mikrobildes 3c beginnt.

Der beschriebene Ablauf ist so lange wiederholbar, bis alle zum Rückvergrößern ausgewählten Mikrobilder 3, welche sich auf den Mikrofilmen 2a bzw. 2b befinden, rückvergrößert sind.

Befinden sich zwei zum Rückvergrößern vorgesehene Mikrobilder nahe zueinander auf dem Träger, kann es in Abhängigkeit von der Umspulgeschwindigkeit zeitsparend sein, sofort das nächste Mikrobild im gleichen Bildfenster zu positionieren und gleich rückzuvergrößern, anstatt erst den Fokus des Objektivs auf das andere Bildfenster umzustellen und dann das darin befindliche Mikrobild rückzuvergrößern.

In Anwendungsfällen, bei welchen die einzelnen, zum Rückvergrößern vorgesehenen Mikrobilder 3 in Form einer Sequenz aus den Mikrobildern 3d, 3e, 3f, 3g angeordnet sind, werden die Mikrobilder 3d bis 3g hintereinander rückvergrößert und der Fokus des Objektivs 4 bleibt auf das Bildfenster 11c fest eingestellt. Erst nachdem das letzte Mikrobild 3g der Sequenz rückvergrößert wurde, fährt die Mechanik 13 das Objektiv 4 wieder auf das Bildfenster 12c und die Rückvergrößerung der Sequenz aus den Mikrobildern 3h, 3i, 3j beginnt.

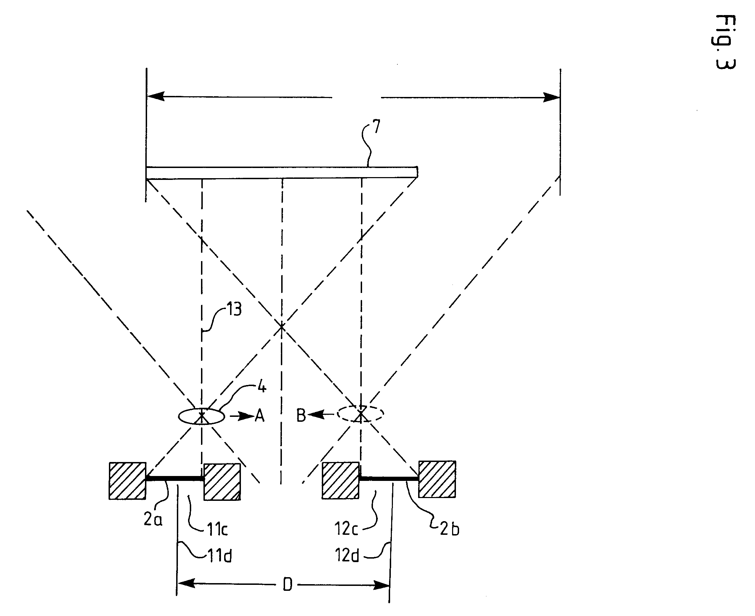

Figur 3 zeigt die Darstellung gemäß Figur 2 entlang der Schnittlinie III. Aus Gründen der besseren Darstellungsfähigkeit wurde auf maßstabgetreue Wiedergabe verzichtet. In den Bildfenstern 11c bzw. 12c befindet sich der Hikrofilm 2a bzw. 2b. Das Objektiv 4, hier nur durch eine Linse dargestellt, besitzt einen Bildkreis, der größer als das Mikrobild 3 ist. Das Objektiv 4 ist dabei so angeordnet, daß das Mikrobild exzentrisch zur optischen Achse 13 liegt. Wenn der Fokus des Objektivs 4 auf das Bildfenster 11c eingestellt ist, befindet sich das Bildfenster hauptsächlich links der optischen Achse 13. Bei der Einstellung auf das Bildfenster 12c befindet sich das Bildfenster 12c hauptsächlich rechts der optischen Achse 13. Dies hat den Vorteil, daß beim Umstellen des Fokus das Objektiv 4 weniger weit bewegt werden muß, als der Abstand D zwischen den Hittelpunkten 11d und 12d der Bildfenster 11c und 12c beträgt. Durch diese Anordnung ist zwar der theoretisch zur Verfügung stehende Bildkreisdurchmesser nicht ausgenützt. Bei der Dimensionierung des Objektivs 4 und der Bildwand 7 wurde dies jedoch berücksichtigt und das Mikrobild 3 wird vollformatig auf der Bildwand 7 abgebildet.

**Patentansprüche**

1. Verfahren zum Rückvergrößern von mikroverfilmten, in Form von Mikrobildern gespeicherten Vorlagen, wobei
   - jeweils eine Vielzahl von Mikrobildern auf einem Träger enthalten ist,
   - eine Auswahl aus der Vielzahl der Mikrobilder zur Rückvergrößerung auf ein Aufnahmemedium getroffen wird,
   - jeweils eines der vorgewählten Mikrobilder in einem für die Rückvergrößerung geeigneten Bildfenster positioniert wird, und
   - durch ein auf das Bildfenster fokussiertes Objektiv eine Übertragung des Mikrobildes auf das Aufnahmemedium erfolgt, dadurch gekennzeichnet, daß
   - während der Übertragung des ersten, auf einem ersten Träger (2a) befindlichen Mikrobildes (3a) ein zweites, auf einem anderen Träger (2b) befindliches Mikrobild (3b) in einem zweiten Bildfenster (12c) positioniert wird, und
   - nach der Übertragung des ersten Mikrobildes (3a) das zweite Mikrobild (3b) auf das Aufnahmemedium (8) Übertragen wird.

2. Verfahren zum Rückvergrößern von mikroverfilmten Vorlagen nach Anspruch 1, dadurch gekennzeichnet, daß nach Übertragung des ersten Mikrobildes (3a) der Fokus des Objektivs (4) vom ersten Bildfenster (11c) auf das zweite Bildfenster (12c) umgestellt wird.

3. Verfahren zum Rückvergrößern von mikroverfilmten Vorlagen nach Anspruch 1, dadurch gekennzeichnet, daß nach Übertragung des ersten Mikrobildes (3a) das, das zweite Mikrobild beinhaltende Bildfenster (12c) in den Fokus des Objektivs (4) gebracht wird.

4. Verfahren nach Anspruch 1, dadurch gekennzeichnet, daß zwei Objektive vorgesehen sind, wobei durch das erste Objektiv das im ersten Bildfenster (11c) und durch das zweite Objektiv das im zweiten Bildfenster (12c) befindliche Mikrobild (3) auf das Aufnahmemedium (8) übertragen wird.

5. Verfahren nach Anspruch 1, dadurch gekennzeichnet, daß
   - auf dem Träger (2a) Sequenzen von zusammengehörigen Mikrobildern (3d bis 3g) enthalten sind,
   - während der Übertragung der ersten Sequenz der Beginn einer zweiten, auf einem anderen Träger (2b) enthaltenen Sequenz im zweiten Bildfenster (12c) positioniert wird, und
   - nach Übertragung des letzten Mikrobildes (3g) der ersten Sequenz die zweite Sequenz auf das Aufnahmemedium (8) übertragen wird.

6. Verfahren nach Anspruch 1 bis 4, dadurch gekennzeichnet, daß bei der Rückvergrößerung einer vorgewählten Anzahl von Mikrobildern (3), die auf mehr als zwei Trägern (2a bis 2g) verteilt sind, ein automatischer Wechsel der Träger (2a, 2g) und nachfolgend die Positionierung des nächsten, zur Rückvergrößerung bestimmten Mikrobildes (3) in einem der Bildfenster (11c, 12c) erfolgt.

7. Verfahren nach Anspruch 1 bis 5, dadurch gekennzeichnet, daß das Rückvergrößern der Mikrobilder (3) auf das Aufnahmemedium (8) abweichend von der durch die Vorwahl bestimmten Reihenfolge erfolgt und eine neue Reihenfolge errechnet wird, bei welcher die Anzahl oder der Zeitaufwand für die Umstellungen des Fokus und/oder das Wechseln der Träger (2a, 2g) minimiert wird.

8. Vorrichtung zum Durchführen eines Verfahrens nach Anspruch 1 bis 6, mit einem auf ein Bildfenster fokussierbaren Objektiv, welches das Mikrobild auf ein Aufnahmemedium überträgt, dadurch gekennzeichnet, daß
   - zwei voneinander unabhängige Positioniereinrichtungen (11, 12) vorgesehen sind, die je ein auf einem Träger (2) enthaltenes Mikrobild (3) gemäß einer Vorwahl selektieren, in je einem Bildfenster (11c, 12c) placieren und
   - eine Einrichtung (13) den Fokus des Objektivs (4) zwischen dem ersten (11c) und dem zweiten (12c) Bildfenster wechselt.

9. Vorrichtung nach Anspruch 7, dadurch gekennzeichnet, daß eine Wechseleinrichtung (14) und ein mehrere Träger (2a bis 2g) aufnehmender Behälter (10) vorgesehen sind, und die Wechseleinrichtung (14) die Träger (2a bis 2g) zwischen dem Behälter (10) und den beiden Positioniereinrichtungen (11, 12) transportiert.

Fig.1

Fig. 2

Fig. 3

EP 0 514 727 A1

| Europäisches Patentamt | **EUROPÄISCHER RECHERCHENBERICHT** | Nummer der Anmeldung |

| **EINSCHLÄGIGE DOKUMENTE** | | | EP 92107857.2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
| A | <u>DE - A - 3 404 285</u><br>(AGFA-GEVAERT AG)<br>* Totality *<br>-- | 1 | G 03 B 21/11<br>G 03 B 27/46 |
| A | <u>DE - A - 2 644 544</u><br>(GAF CORPORATION)<br>* Totality *<br>-- | 1 | |
| A | <u>GB - A - 1 457 545</u><br>(CANON)<br>* Totality *<br>-- | 1 | |
| D,A | <u>DE - C - 3 622 008</u><br>(AGFA-GEVAERT AG)<br>* Totality *<br>---- | 1 | |
| | | | **RECHERCHIERTE SACHGEBIETE (Int. Cl.⁵)**<br><br>G 03 B 21/00<br>G 03 B 27/00 |
| Der vorliegende Recherchenbericht wurde für alle Patentansprüche erstellt. | | | |

| Recherchenort | Abschlußdatum der Recherche | Prüfer |
|---|---|---|
| WIEN | 04-08-1992 | HANSI |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82